# EUROPEAN PATENT APPLICATION

(11) **EP 4 556 333 A1**
(43) Date of publication of application: **21.05.2025**
(21) Application number: 22950469.1
(22) Date of filing: 11.07.2022
(51) Int. Cl.: B60W 20/50, B60K 6/42, B60L 53/14

(54) **HYBRID VEHICLE CONTROL METHOD AND HYBRID VEHICLE CONTROL DEVICE**

(71) Applicant: NISSAN MOTOR CO., LTD., Kanagawa 221-0023 (JP)
(72) Inventor: NARITA, Sadaharu, Atsugi-shi, Kanagawa 243-0123 (JP)
(74) Representative: Hoefer & Partner Patentanwälte mbB
(86) International application number: PCT/JP2022/027318
(87) International publication number: WO 2024/013826

(57) **Abstract**

One aspect of the present invention refers to the hybrid vehicle control method. According to the hybrid vehicle control method, when a getting-off of a driver is detected while an engine is in a runnable state, a notification sound is output to the outside of a hybrid vehicle to notify that the engine is in the runnable state. Then, when an external electric power supply for supplying electric power of a battery to an external device is performed while the engine is in the runnable state, the notification sound is muted when the getting-off of the driver is detected and a predetermined specific operation input is detected.

## Description

### TECHNICAL FIELD

The present invention relates to a hybrid vehicle control method and a hybrid vehicle control device.

### BACKGROUND ART

JP2017-155604A discloses an engine control device that determines whether a running engine should be stopped after a driver gets off a vehicle, and automatically stops the running engine when determining that the engine should be stopped.

### SUMMARY OF INVENTION

A hybrid vehicle includes an engine for driving the hybrid vehicle or for power generation. Therefore, when a driver leaves the hybrid vehicle regardless of the fact that the engine is in a runnable state, the hybrid vehicle may output a predetermined notification sound to the outside of the hybrid vehicle in order to notify that the engine is still in the runnable state. Then, the notification sound continues to be output until the driver returns to the hybrid vehicle or until the engine is in a non-runnable state by a predetermined operation.

On the other hand, since the hybrid vehicle is equipped with a largecapacity battery, there is a case in which the hybrid vehicle has an external electric power supply function of applying (supplying) electric power of the battery to an external device as necessary during outdoor activities such as camp, disasters, or the like. Further, in the hybrid vehicle that notifies that the engine is in the runnable state, the notification sound is output even when external electric power supply is performed. However, when the external electric power supply is performed, the driver often gets off the hybrid vehicle while the engine is still in the runnable state. Therefore, when the external electric power supply is performed while the notification sound continues to be output to notify that the engine is in the runnable state, the driver or another person in the vicinity of the hybrid vehicle may feel uncomfortable beyond the original significance thereof.

An object of the present invention is to provide a hybrid vehicle control method and a hybrid vehicle control device that can output a notification sound for notifying that an engine is in a runnable state and can mute the notification sound depending on a situation in principle.

One aspect of the present invention refers to the hybrid vehicle control method. According to the hybrid vehicle control method, when a getting-off of a driver is detected while an engine is in a runnable state, a notification sound is output to the outside of a hybrid vehicle to notify that the engine is in the runnable state. Then, when an external electric power supply for supplying electric power of a battery to an external device is performed while the engine is in the runnable state, the notification sound is muted when the getting-off of the driver is detected and a predetermined specific operation input is detected.

### BRIEF DESCRIPTION OF DRAWINGS

[FIG. 1] FIG. 1 is a block diagram showing a schematic configuration of a hybrid vehicle.
[FIG. 2] FIG. 2 is an explanatory diagram showing states related to notification necessity and output of a notification sound.
[FIG. 3] FIG. 3 is a block diagram showing a configuration of a controller related to the output and muting of the notification sound.
[FIG. 4] FIG. 4 is a flowchart of a scene in which a muting flag is changed from a clear state to a set state.
[FIG. 5] FIG. 5 is a flowchart of a scene in which the muting flag is changed from the set state to the clear state.
[FIG. 6] FIG. 6 is a flowchart related to the output and the muting of the notification sound.
[FIG. 7] FIG. 7 is a flowchart related to a transition from a notification state γ to a notification state β.
[FIG. 8] FIG. 8 is a flowchart related to a transition from the notification state β to a notification state α, and a transition from the notification state γ to the notification state α.
[FIG. 9] FIG. 9 is a time chart showing an output state of the notification sound and the like.
[FIG. 10] FIG. 10 is another time chart showing the output state of the notification sound and the like.
[FIG. 11] FIG. 11 is a flowchart according to a modification.

### DESCRIPTION OF EMBODIMENTS

### [Embodiments]

Hereinafter, embodiments of the present invention will be described with reference to the drawings.

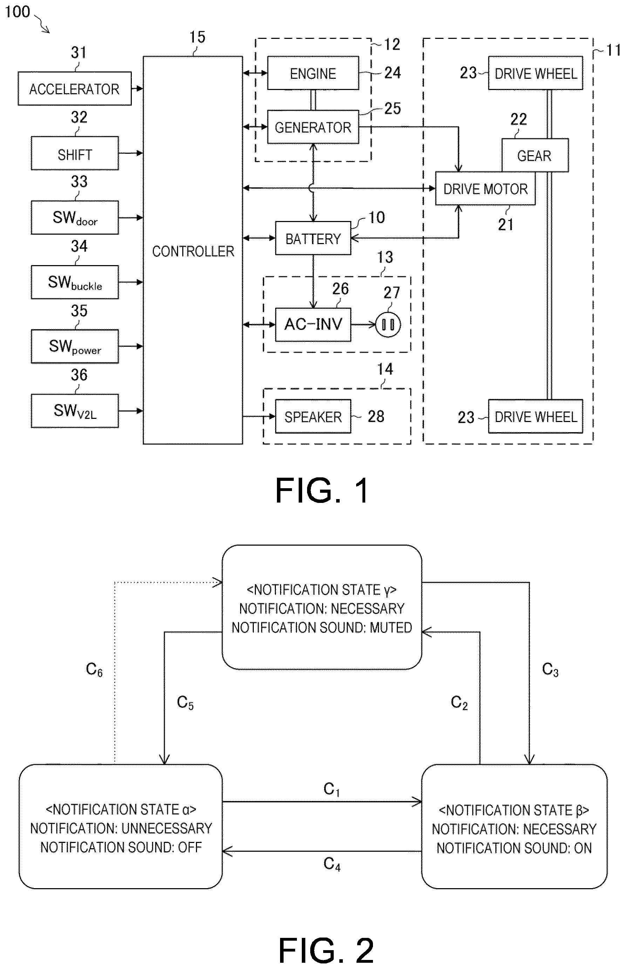

FIG. 1 is a block diagram showing a schematic configuration of a hybrid vehicle 100. As shown in FIG. 1, the hybrid vehicle 100 according to the present embodiment is a so-called series type hybrid vehicle, and includes a battery 10, a vehicle drive system 11, a power generation system 12, an external electric power supply system 13, a vehicle exterior notification system 14, and a controller 15. Among them, the vehicle drive system 11, the power generation system 12, and the external electric power supply system 13 constitute a first electric power system (first circuit) that is driven at a relatively high electric power in order to generate power or the like by electricity. The respective parts constituting the first electric power system are energized in common. Further, the vehicle exterior notification system 14, other auxiliary devices (including devices not shown), and the like constitute a second electric power system (second circuit) that is driven at a relatively low electric power in order to use electricity as a signal or the like. The respective parts constituting the second electric power system are energized in common. The hybrid vehicle 100 may be any type of hybrid vehicle other than a parallel type hybrid vehicle as long as the hybrid vehicle 100 includes an engine (internal combustion engine) for driving the hybrid vehicle or for power generation.

The battery 10 supplies electric power to the vehicle drive system 11. That is, the electric power of the battery 10 is used to drive the hybrid vehicle 100. The battery 10 can supply the electric power to an external device (not shown) via the external electric power supply system 13. The battery 10 is, for example, a lithium-ion battery, and is chargeable. The battery 10 is charged with regenerative electric power input from the vehicle drive system 11, and is also charged with electric power generated by the power generation system 12.

The vehicle drive system 11 is a system that drives the hybrid vehicle 100. The vehicle drive system 11 includes a drive motor 21, a gear 22, and drive wheels 23. The drive motor 21 is an electric motor that generates a drive force (torque) in the drive wheels 23 by the electric power of the battery 10. The power generated by the drive motor 21 is transmitted to the drive wheels 23 via the gear 22. When the drive motor 21 rotates together with the drive wheels 23, the drive motor 21 inputs the regenerative electric power to the battery 10.

In principle, the power generation system 12 generates the electric power for charging the battery 10. The power generation system 12 includes an engine 24, a generator 25, and the like. The engine 24 is a power source of the power generation system 12, and is, for example, an internal combustion engine that generates power by using fuel other than gasoline. The generator 25 is rotated by the power input from the engine 24 and generates the electric power for charging the battery 10. In the present embodiment, the power generation system 12 is appropriately operated such that a state of charge (SOC) of the battery 10 falls within a predetermined range. Therefore, for example, when the state of charge of the battery 10 decreases, the power generation system 12 may be automatically operated regardless of an operation by the driver or the like.

The power generation system 12 (generator 25) can directly supply the generated electric power to the drive motor 21. In this case, the drive motor 21 is driven by the electric power of the battery 10, the electric power supplied from the power generation system 12, or both of the above.

The external electric power supply system 13 performs external electric power supply for applying (supplying) the electric power of the battery 10 to one or a plurality of external devices as necessary. The external device refers to an electric device, an electrothermal device, an electronic device, another electrical product, or an electrical equipment provided separately from the hybrid vehicle 100. The external device may be used outside the hybrid vehicle 100, and may be used inside the hybrid vehicle 100. The external electric power supply system 13 may be able to directly supply the electric power generated by the power generation system 12 to the external device. In the present embodiment, the external electric power supply system 13 supplies the electric power of the battery 10 to the external device. Hereinafter, a state in which the external electric power supply system 13 is operated and the external electric power supply can be performed by connecting the external device is referred to as an "ON" state, and a state in which the external electric power supply system 13 is stopped and the external electric power supply cannot be performed even when the external device is connected is referred to as an "OFF" state.

The external electric power supply system 13 includes an external electric power supply inverter 26 (AC-INV) and one or a plurality of outlets 27 (sockets). The external electric power supply inverter 26 converts DC power output from the battery 10 into AC power. The outlet 27 supplies the AC power output from the external electric power supply inverter 26 to the external device connected thereto. The outlet 27 is provided in a passenger compartment, a cargo compartment, or both of the above. For example, in the passenger compartment, the outlet 27 is provided at one or a plurality of positions such as a rear portion of a center console. In the cargo compartment, the outlet 27 is provided at one or a plurality of positions such as an inner wall.

The vehicle exterior notification system 14 outputs a sound or a voice to the outside of the hybrid vehicle 100. Accordingly, the vehicle exterior notification system 14 notifies a person and the like (including animals other than a hearing dog) outside the hybrid vehicle 100 of various information according to the output sound or voice. The vehicle exterior notification system 14 includes, for example, a speaker 28 that outputs a sound or a voice to the outside of the hybrid vehicle 100.

In the present embodiment, the vehicle exterior notification system 14 outputs a predetermined approaching vehicle notification sound by the speaker 28 to notify a person and the like outside the hybrid vehicle that the hybrid vehicle 100 is approaching. That is, the vehicle exterior notification system 14 functions as a so-called approaching vehicle notification system. The approaching vehicle notification system may also be referred to as an approaching vehicle sound for pedestrian (VSP) system. For example, the vehicle exterior notification system 14 outputs the approaching vehicle notification sound when a vehicle speed is a low speed equal to or lower than a predetermined vehicle speed (for example, 30 km/h) at the time of startup of the hybrid vehicle 100, and when the vehicle speed becomes equal to or lower than a predetermined vehicle speed (for example, 25 km/h) at the time of deceleration of the hybrid vehicle 100.

Further, when the driver gets off the hybrid vehicle while the engine 24 is in a runnable state, the vehicle exterior notification system 14 outputs a notification sound (hereinafter, simply referred to as a notification sound S_{N}) to the outside of the hybrid vehicle 100 to notify that the engine 24 is in the runnable state. Accordingly, the vehicle exterior notification system 14 notifies the driver who has got off the hybrid vehicle that the engine 24 is still in the runnable state, and prompts the driver to set the engine 24 into a non-runnable state when the driver leaves the hybrid vehicle 100.

In the present embodiment, the vehicle exterior notification system 14 uses the same sound source as the approaching vehicle notification sound for the notification sound S_{N}. However, the vehicle exterior notification system 14 can output the notification sound S_{N} configured by a sound source different from the approaching vehicle notification sound.

In addition, a running state S_{V} of the hybrid vehicle 100 includes three stages, that is, an ignition off stage ("IGN-OFF"), an ignition on stage ("IGN-ON"), and a ready on stage ("READY-ON"). Among these states, the description "the engine 24 is in the runnable state" refers to a state in which the hybrid vehicle 100 is in the READY-ON state.

The IGN-OFF state refers to a state in which the vehicle drive system 11, the power generation system 12, and the external electric power supply system 13 (that is, the first electric power system), and the vehicle exterior notification system 14 and the like (that is, the second electric power system) are not energized, and the entire hybrid vehicle 100 ceases to function. Therefore, in the IGN-OFF state, the hybrid vehicle 100 cannot start up, and the vehicle exterior notification system 14 and the like do not function.

The IGN-ON state refers to a state in which the first electric power system is not energized and the second electric power system is energized, and a part of the hybrid vehicle 100 functions. In the IGN-ON state, although the hybrid vehicle 100 cannot start up, the vehicle exterior notification system 14 and the like function. The IGN-ON state may be referred to as an accessory mode or the like.

The READY-ON state refers to a state in which the first electric power system and the second electric power system are energized, and all functions of the hybrid vehicle 100 are usable. In the READY-ON state, the hybrid vehicle 100 can start up, and the vehicle exterior notification system 14 and the like function. In the present embodiment, the description "can start up" means that the first electric power system is energized regardless of states of a shift 32, a parking brake (not shown), and the like, and all or a part of the first electric power system is in a state of being substantially immediately operable as necessary.

In the present embodiment, the IGN-OFF state and the IGN-ON state, that is, a state in which at least the first electric power system is not energized, may be collectively referred to as a ready off state ("READY-OFF").

The controller 15 is a control device that collectively controls the respective parts constituting the hybrid vehicle 100. The controller 15 includes one or a plurality of computers. The controller 15 is programmed to operate the respective parts of the hybrid vehicle 100 by performing calculations or the like at a predetermined control cycle. One or a plurality of programs executed to operate the respective parts of the hybrid vehicle 100 by the controller 15 constitute a control program of the hybrid vehicle 100. The control program of the hybrid vehicle 100 is provided or implemented in a state of being stored in a storage medium other than a memory. Further, the control program of the hybrid vehicle 100 may be provided via an electrical communication line or the like, or all or a part thereof may be updated.

Specifically, the controller 15 functions as a battery control unit that manages or controls the battery 10, a vehicle drive control unit that controls driving of the hybrid vehicle 100 by the vehicle drive system 11, a power generation control unit that controls power generation by the power generation system 12, an external electric power supply control unit that controls the external electric power supply by the external electric power supply system 13, a notification control unit that controls output of the notification sound S_{N} and the like by the vehicle exterior notification system 14, and the like.

When controlling the respective parts of the hybrid vehicle 100, the controller 15 can appropriately acquire or calculate vehicle parameters indicating operating states of the respective parts or the like as necessary. In the present embodiment, the controller 15 appropriately acquires the vehicle parameters from, for example, an accelerator 31, the shift 32, a door switch 33 (SW_{door}), a seat belt releasable switch 34 (SW_{buckle}), a power switch 35 (SW_{power}), an external electric power supply switch 36 (SW_{V2L}), and the like.

An operation amount (accelerator opening A_{PO}) of the accelerator 31 represents a drive request of the driver. The controller 15 controls the drive motor 21 based on the operation amount (accelerator opening A_{PO} (not shown)) of the accelerator 31.

The shift 32 can be fixed to, for example, positions including a "P (parking) range", an "R (reverse) range", an "N (neutral) range", and a "D (drive) range". The positions of the shift 32 (hereinafter, referred to as shift positions) are used for a drive control of the hybrid vehicle 100, and are also used for detecting getting-in or getting-off of a passenger other than the driver. In the present embodiment, the controller 15 detects the getting-off and the getting-in of the driver based on the shift positions.

The door switch 33 detects an open and close state of a door provided in the hybrid vehicle 100. The hybrid vehicle 100 includes, for example, doors provided on the left and right sides of a driver's seat, a front passenger seat, and a rear passenger seat and provided in the cargo compartment, and the door switch 33 is provided in each door. In the present embodiment, for simplicity, the door switch 33 outputs a signal indicating that the door is opened when one or more doors among these doors are opened, and outputs a signal indicating that the door is closed when all these doors are closed. In the present embodiment, the controller 15 detects the getting-off and the getting-in of the driver based on the open and close state of the door detected by the door switch 33.

The seat belt releasable switch 34 detects a fastened and released state of a seat belt based on a fastened or unfastened state of a seat belt buckle. In the present embodiment, for simplicity, the seat belt releasable switch 34 detects a fastened and released state of a seat belt at the driver's seat. In the present embodiment, the controller 15 detects the getting-off and the getting-in of the driver based on the fastened and released state of the seat belt detected by the seat belt releasable switch 34.

The power switch 35 controls the running state S_{V} of the hybrid vehicle 100. When the power switch 35 is depressed without depressing a brake pedal (not shown) in the IGN-OFF state, the controller 15 transitions the hybrid vehicle 100 into the IGN-ON state. When the power switch 35 is depressed while the brake pedal is depressed in the IGN-OFF state, the controller 15 transitions the hybrid vehicle 100 to the READY-ON state. When the power switch 35 is depressed in the IGN-ON state or the READY-ON state, the controller 15 transitions the hybrid vehicle 100 to the IGN-OFF state, for example. In the present embodiment, the external electric power supply function can be used when the hybrid vehicle 100 is in the READY-ON state.

The external electric power supply switch 36 switches ON/OFF of the external electric power supply system 13. When the external electric power supply switch 36 is depressed in a state in which the external electric power supply system 13 is turned off, that is, in a state in which the external electric power supply function is not used, the controller 15 operates the external electric power supply inverter 26 so that the external electric power supply function can be used. When the external electric power supply switch 36 is depressed while the external electric power supply function is being used, the controller 15 stops the external electric power supply inverter 26 to end the external electric power supply. That is, the external electric power supply switch 36 is an operation switch for starting or stopping the external electric power supply.

Further, in the present embodiment, the external electric power supply switch 36 is also used to mute the notification sound S_{N}. That is, in the present embodiment, the external electric power supply switch 36 also functions as a muting switch for intentionally muting the notification sound S_{N} by the driver. Specifically, when detecting that the external electric power supply switch 36 is subjected to a long-pressing operation after the notification sound S_{N} is output, the controller 15 mutes the notification sound S_{N} output by the vehicle exterior notification system 14. Regarding the external electric power supply switch 36, the long-pressing operation refers to opening the external electric power supply switch 36 after depressing the external electric power supply switch 36 for a predetermined time (for example, 1.5 seconds) or more. A normal operation time of the external electric power supply switch 36, that is, a duration during which the external electric power supply switch 36 is depressed to turn on/off the external electric power supply system 13 is usually shorter than the predetermined time.

A muting operation using the external electric power supply switch 36 is an example. When detecting another predetermined operation, the controller 15 can mute the notification sound S_{N}.

Hereinafter, a control related to the output and the muting of the notification sound S_{N} when the external electric power supply function is used by the hybrid vehicle 100 and a more specific configuration of the controller 15 related to the control will be described in detail.

FIG. 2 is an explanatory diagram showing states (notification states) related to notification necessity and the output of the notification sound S_{N}. As shown in FIG. 2, in the hybrid vehicle 100, there are three states related to the output and the muting of the notification sound S_{N}, that is, a notification state α, a notification state β, and a notification state γ.

The notification state α refers to a state in which it is not necessary to notify that the engine 24 is in the runnable state. Therefore, in the notification state α, the notification sound S_{N} is in an "OFF" state of not being output. When the hybrid vehicle 100 is in the READY-ON state in which the engine 24 can run, that is, a state in which the driver has got in the hybrid vehicle, or when the hybrid vehicle 100 is in the READY-OFF state in which the engine 24 cannot run regardless of whether the driver has got in the hybrid vehicle, the hybrid vehicle 100 is in the notification state α.

The notification state β refers to a state in which it is necessary to notify that the engine 24 is in the runnable state, and the notification sound S_{N} is output (turned on). When the driver gets off the hybrid vehicle in the READY-ON state in which the engine 24 can run, the hybrid vehicle 100 is in the notification state β.

The notification state γ refers to a state in which although it is necessary to notify that the engine 24 is in the runnable state, the notification sound S_{N} is muted. Regarding the notification sound S_{N}, the muting means that the output of the notification sound S_{N} is turned off, or the notification sound S_{N} is deactivated by, for example, reducing the volume of the notification sound S_{N} as compared with that in the notification state β. In the present embodiment, the muting of the notification sound S_{N} is achieved by turning off the output of the notification sound S_{N}, or substantially setting the volume of the notification sound S_{N} to zero.

The notification states described above transition into each other when the controller 15 detects that predetermined conditions C₁ to C₅ are satisfied.

The condition C₁ refers to a condition for transitioning from the notification state α to the notification state β, that is, a condition used for outputting the notification sound S_{N}. In the present embodiment, the condition C₁ means that the driver gets off the hybrid vehicle in the READY-ON state.

The condition C₂ refers to a condition for transitioning from the notification state β to the notification state γ, that is, a condition used for muting the notification sound S_{N}. In the present embodiment, the condition C₂ means that the external electric power supply switch 36 is subjected to the long-pressing operation.

The condition C₃ refers to a condition for transitioning from the notification state γ to the notification state β, that is, a condition used for unmuting the notification sound S_{N}. In the present embodiment, the condition C₃ means that (1) the external electric power supply is turned off by an operation on the external electric power supply switch 36, or (2) the driver gets in the hybrid vehicle. When an abnormality in the external electric power supply switch 36 is detected, the notification state γ transitions to the notification state β regardless of the condition C₃.

The condition C₄ refers to a condition for transitioning from the notification state β to the notification state α, that is, a condition used for stopping the output of the notification sound S_{N}. In the present embodiment, the condition C₄ means that the output of the notification sound S_{N} itself is unnecessary because (1) the hybrid vehicle 100 is in the READY-OFF state, or (2) the driver has got in the hybrid vehicle.

The condition C₅ refers to a condition for transitioning from the notification state γ to the notification state α, that is, a condition used for changing the notification sound S_{N} from a muting state to a stop state. In the present embodiment, the condition C₅ is the same as the condition C₄, and means that the output of the notification sound S_{N} itself is unnecessary because (1) the hybrid vehicle 100 is in the READY-OFF state, or (2) the driver has got in the hybrid vehicle.

A condition C₆ refers to a condition for transitioning from the notification state α to the notification state γ without going through the notification state β, that is, a condition used for muting the notification sound S_{N} from the beginning when a notification is necessary. In the present embodiment, the condition C₆ is not set. Therefore, it is impossible to directly transition from the notification state α to the notification state γ without going through the notification state β. This is because the fact that the engine 24 is in the runnable state is reliably notified to the driver and then an option for intentionally muting the notification sound S_{N} is provided to the driver.

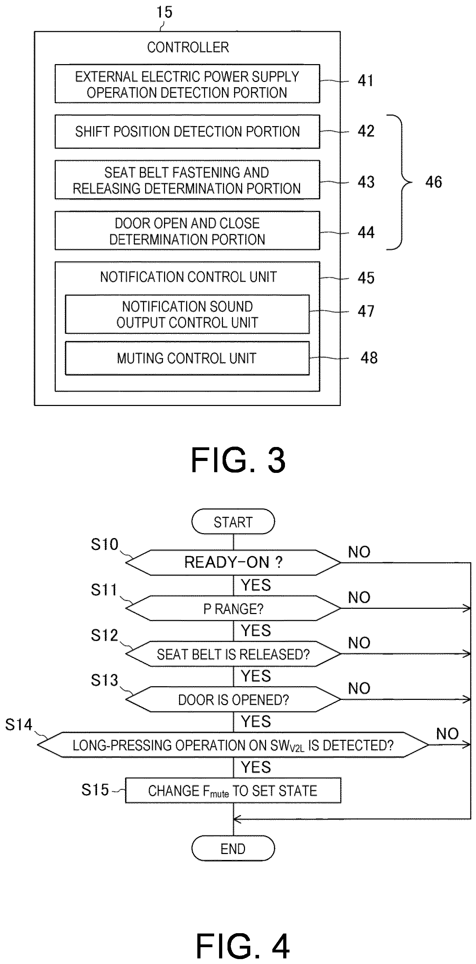

FIG. 3 is a block diagram showing a configuration of the controller 15 related to the output and the muting of the notification sound S_{N}. As shown in FIG. 3, the controller 15 includes an external electric power supply operation detection portion 41, a shift position detection portion 42, a seat belt fastening and releasing determination portion 43, a door open and close determination portion 44, and a notification control unit 45 in order to transition the notification state α, the notification state β, and the notification state γ to each other.

The external electric power supply operation detection portion 41 detects the operation on the external electric power supply switch 36 (SW_{V2L}). When detecting the operation on the external electric power supply switch 36 in a state in which the external electric power supply is not performed, the external electric power supply operation detection portion 41 causes the external electric power supply inverter 26 (AC-INV) to operate so as to set the state in which the external electric power supply can be performed. Further, when detecting the operation on the external electric power supply switch 36, the external electric power supply operation detection portion 41 ends the external electric power supply by stopping the external electric power supply inverter 26. In addition, the external electric power supply operation detection portion 41 measures the operation time of the external electric power supply switch 36 and compares the operation time with the predetermined time (threshold value). Accordingly, the external electric power supply operation detection portion 41 detects the long-pressing operation on the external electric power supply switch 36. Specifically, when the operation time is equal to or longer than the predetermined time, the external electric power supply operation detection portion 41 determines that the operation on the external power supply switch 36 is the long-pressing operation. Hereinafter, regarding the operation on the external electric power supply switch 36, an operation in which the operation time is less than the threshold value is referred to as a normal operation in contrast to the long-pressing operation. Further, the long-pressing operation on the external electric power supply switch 36 functions as a trigger for muting the notification sound S_{N}, and also functions as an operation for turning on the external electric power supply.

In addition, the external electric power supply operation detection portion 41 can detect the abnormality in the external electric power supply switch 36 based on the operation time of the external electric power supply switch 36. Specifically, the external electric power supply operation detection portion 41 compares the operation time of the external electric power supply switch 36 with a predetermined abnormality detection threshold value (for example, 1 minute). When the operation time of the external electric power supply switch 36 is equal to or larger than the abnormality detection threshold value, the external electric power supply operation detection portion 41 detects that the abnormality occurs in the external electric power supply switch 36.

The shift position detection portion 42 detects the shift position. In particular, the shift position detection portion 42 detects whether the shift position is in the P range in order to determine the transition of the notification state.

The seat belt fastening and releasing determination portion 43 determines the fastened and released state of the seat belt by detecting the ON/OFF of the seat belt releasable switch 34 (SW_{buckle}). When the seat belt releasable switch 34 is turned on, the seat belt fastening and releasing determination portion 43 determines that the seat belt is fastened. On the other hand, when the seat belt releasable switch 34 is turned off, the seat belt fastening and releasing determination portion 43 determines that the seat belt is not fastened.

The door open and close determination portion 44 determines the open and close state of the door by detecting the ON/OFF of the door switch 33 (SW_{door}).

The shift position detection portion 42, the seat belt fastening and releasing determination portion 43, and the door open and close determination portion 44 described above constitute a getting-off detection portion for detecting the getting-off of the driver and a getting-in detection portion for detecting the getting-in of the driver (hereinafter, these portions are collectively referred to as a getting-in and getting-off detection portion 46). That is, the controller 15 detects the getting-off and the getting-in of the driver based on a combination of a detection result of the shift position detection portion 42 and determination results of the seat belt fastening and releasing determination portion 43 and the door open and close determination portion 44. Specifically, when the shift position is in the P range, the seat belt is not fastened, and the door is opened, the getting-in and getting-off detection portion 46 detects the getting-off of the driver. Further, when (1) a condition is satisfied that the P range is released or the seat belt is fastened and (2) the door is closed, the getting-in and getting-off detection portion 46 detects the getting-in of the driver. Hereinafter, the detection of the getting-off of the driver by the getting-in and getting-off detection portion 46 is referred to as a getting-off detection, and the detection of the getting-in is referred to as a getting-in detection. In addition, the detection of the getting-in or the getting-off by the getting-in and getting-off detection portion 46 may be collectively referred to as a getting-in and getting-off detection.

The notification control unit 45 controls the ON/OFF and the muting of the notification sound S_{N} based on the running state S_{V} of the hybrid vehicle 100, an operation condition of the external electric power supply switch 36, and a result of the getting-in and getting-off detection. The notification control unit 45 includes a notification sound output control unit 47 and a muting control unit 48.

The notification sound output control unit 47 determines whether the notification is necessary based on the running state S_{V} of the hybrid vehicle 100 and the result of the getting-in and getting-off detection. Specifically, when the driver gets off the hybrid vehicle in the READY-ON state, that is, when the condition C₁ is satisfied, the notification sound output control unit 47 determines that it is necessary to notify that the engine 24 is in the runnable state. Then, the notification sound output control unit 47 causes the vehicle exterior notification system 14 to output the notification sound S_{N}. On the other hand, when the READY-OFF state is achieved or when the driver gets in the hybrid vehicle, that is, when the condition C₄ or the condition C₅ is satisfied, the notification sound output control unit 47 determines that it is not necessary to notify that the engine 24 is in the runnable state. Then, the notification sound output control unit 47 causes the vehicle exterior notification system 14 to stop the output of the notification sound S_{N}.

The muting control unit 48 controls the muting or the unmuting of the notification sound S_{N} based on the running state S_{V} of the hybrid vehicle 100, the operation condition of the external electric power supply switch 36, and the result of the getting-in and getting-off detection. In addition, the muting control unit 48 manages the muting or the unmuting of the notification sound S_{N} by a muting flag Fₘᵤₜₑ. The muting flag Fₘᵤₜₑ refers to a flag that is in a "set" state when the notification sound S_{N} is muted, and is in a "clear" state when the notification sound S_{N} can be output. When the hybrid vehicle 100 is in the READY-OFF state, the muting control unit 48 sets the muting flag Fₘᵤₜₑ to the set state. Then, when the hybrid vehicle 100 is in the READY-ON state, the muting control unit 48 changes the muting flag Fₘᵤₜₑ to the clear state. Accordingly, the notification sound S_{N} can be output as necessary.

Further, when the long-pressing operation on the external electric power supply switch 36 is detected while the hybrid vehicle 100 is in the READY-ON state (that is, the muting flag Fₘᵤₜₑ is in the clear state), the muting control unit 48 changes the muting flag Fₘᵤₜₑ from the clear state to the set state as an exception. That is, when the condition C₂ is satisfied, the muting control unit 48 sets the muting flag Fₘᵤₜₑ to the set state. Accordingly, the muting control unit 48 mutes the notification sound S_{N}.

On the other hand, (1) when the external electric power supply is turned off by the operation on the external electric power supply switch 36 or (2) when the driver gets in the hybrid vehicle, the muting control unit 48 sets the muting flag Fₘᵤₜₑ to the clear state. That is, when the condition C₃ is satisfied, or when the condition C₅ is satisfied due to the getting-in of the driver, the muting control unit 48 sets the muting flag Fₘᵤₜₑ to the clear state. Accordingly, the muting of the notification sound S_{N} is cancelled.

In addition, when the abnormality in the external electric power supply switch 36 is detected, or when an abnormality in the door or the seat belt is detected, the muting control unit 48 sets the muting flag Fₘᵤₜₑ to the clear state. This is because the notification sound S_{N} is prevented from being erroneously muted when the abnormality occurs in the external electric power supply switch 36, the door, the seat belt, or the like. Further, when the P range is released and the door is closed, that is, when the driver has got in the hybrid vehicle, the muting control unit 48 also sets the muting flag Fₘᵤₜₑ to the clear state. This is because the output of the approaching vehicle notification sound is prevented from being hindered.

FIG. 4 is a flowchart of a scene in which the muting flag Fₘᵤₜₑ is changed from the clear state to the set state. As shown in FIG. 4, when the hybrid vehicle 100 is in the READY-ON state in step S10, the getting-in and getting-off detection in steps S11 to S12 is performed. Specifically, it is checked whether the shift position is in the P range in step S11, and it is checked whether the seat belt is released in step S12. Further, it is checked whether the door is opened in step S13. Then, when the shift position is in the P range, the seat belt is released, and the door is opened, it is determined that the driver gets off the hybrid vehicle in the READY-ON state, and the control proceeds to step S14.

When the long-pressing operation on the external electric power supply switch 36 (SW_{V2L}) is detected in step S14, the muting control unit 48 changes the muting flag Fₘᵤₜₑ to the clear state in step S15. When the hybrid vehicle 100 is in the READY-OFF state in step S10, or when any one of the conditions in steps S11 to S13 is not satisfied and it is determined that the driver does not get off the hybrid vehicle, the muting control unit 48 maintains the muting flag Fₘᵤₜₑ in the clear state.

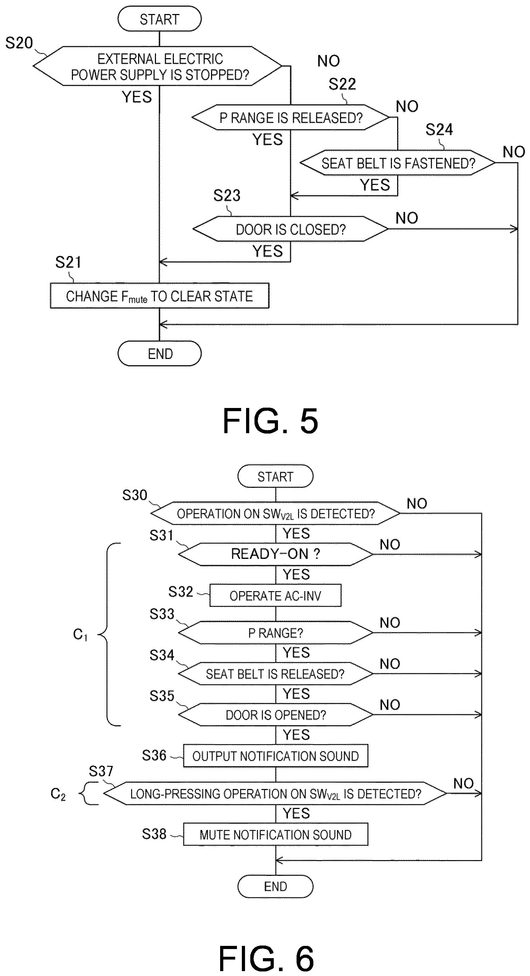

FIG. 5 is a flowchart of a scene in which the muting flag Fₘᵤₜₑ is changed from the set state to the clear state. As shown in FIG. 5, when the external electric power supply operation detection portion 41 detects the normal operation on the external electric power supply switch 36 in step S20, the external electric power supply is stopped. In this case, the control proceeds to step S21, and the muting control unit 48 changes the muting flag Fₘᵤₜₑ to the clear state. On the other hand, when the normal operation on the external electric power supply switch 36 is not detected and the state in which the external electric power supply can be performed continues in step S20, the control proceeds to step S22, and the getting-in detection of the driver is performed.

The shift position is checked in step S22. When it is checked that the P range is released, that is, the shift position is moved from the P range to another range in step S22, the control proceeds to step S23. On the other hand, when the P range is maintained in step S22, the control proceeds to step S24.

The open and close state of the door is checked in step S23. When it is checked in step S23 that the door is closed, the control proceeds to step S21, and the muting control unit 48 changes the muting flag Fₘᵤₜₑ to the set state. On the other hand, when it is checked in step S23 that the door is opened, the muting control unit 48 maintains the muting flag Fₘᵤₜₑ in the set state.

The fastened and released state of the seat belt is checked in step S24. When the fastening of the seat belt is checked in step S24, the control proceeds to step S23. Further, as described above, the muting control unit 48 changes or maintains the muting flag Fₘᵤₜₑ according to the open and close state of the door. On the other hand, when it is checked in step S24 that the seat belt is not fastened, the muting control unit 48 maintains the muting flag Fₘᵤₜₑ in the set state.

That is, when the external electric power supply is stopped, or when the driver gets in the hybrid vehicle 100, the muting control unit 48 changes the muting flag Fₘᵤₜₑ to the clear state.

Hereinafter, effects related to the output and the muting of the notification sound S_{N} in the hybrid vehicle 100 configured as described above will be described.

FIG. 6 is a flowchart related to the output and the muting of the notification sound S_{N}. As shown in FIG. 6, when the external electric power supply operation detection portion 41 detects the normal operation or the long-pressing operation on the external electric power supply switch 36 in step S30, the control proceeds to step S31, and the controller 15 checks whether a drive state of the hybrid vehicle 100 is the READY-ON state. When the hybrid vehicle 100 is in the READY-ON state in step S31, the controller 15 operates the external electric power supply inverter 26 (AC-INV) in step S32 so that the external electric power supply system 13 can perform the external electric power supply, and the control proceeds to step S33. At this time, the hybrid vehicle 100 is in the notification state α, and the muting flag Fₘᵤₜₑ is in the clear state.

The getting-in and getting-off detection portion 46 detects the getting-off of the driver in steps S33 to S35. Specifically, the shift position detection portion 42 checks whether the shift position is in the P range in step S33. In step S34, the seat belt fastening and releasing determination portion 43 checks that the seat belt is released. Then, in step S35, the door open and close determination portion 44 checks that the door is opened. As a result, when it is detected that the driver gets off the hybrid vehicle, the condition C₁ is satisfied, and thus the notification state of the hybrid vehicle 100 transitions from the initial notification state α to the notification state β. That is, the control proceeds to step S36, and the notification sound output control unit 47 causes the vehicle exterior notification system 14 to output the notification sound S_{N}.

Thereafter, when the external electric power supply operation detection portion 41 detects the long-pressing operation on the external electric power supply switch 36 in step S37, the condition C₂ is satisfied, and thus the notification state of the hybrid vehicle 100 transitions from the notification state β to the notification state γ. That is, the control proceeds to step S38, and the muting control unit 48 sets the muting flag Fₘᵤₜₑ to the set state so as to mute the notification sound S_{N}.

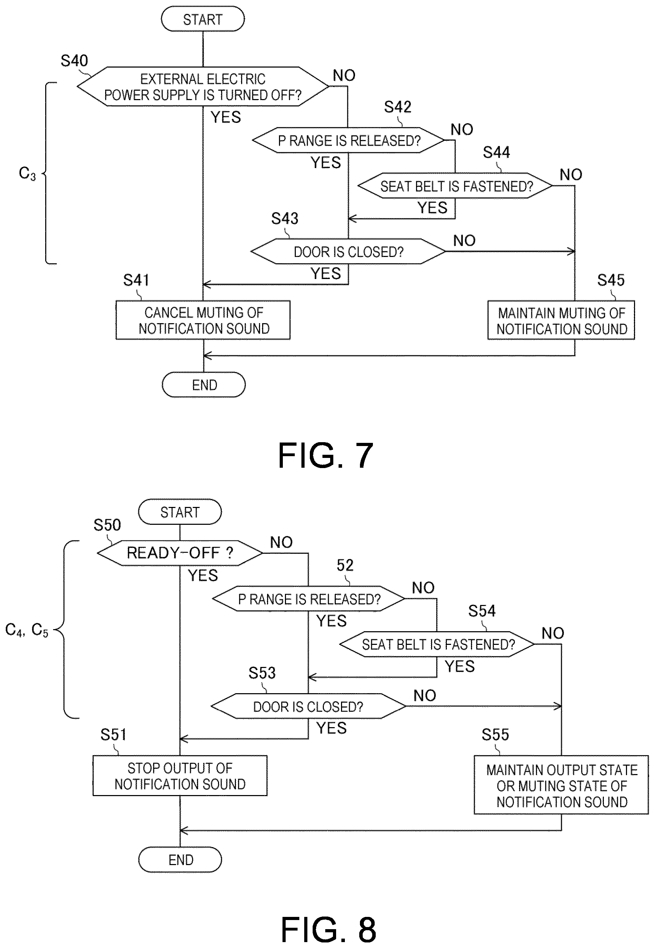

FIG. 7 is a flowchart related to a transition from the notification state γ to the notification state β. As shown in FIG. 7, in step S40, when the external power supply operation detection unit 41 detects the operation (normal operation) on the external power supply switch 36, the external electric power supply inverter 26 is stopped to turn off the external electric power supply. In this case, since the condition C₃ is satisfied, the notification state of the hybrid vehicle 100 transitions from the notification state γ to the notification state β. That is, the control proceeds to step S41, and the muting of the notification sound S_{N} is cancelled. Accordingly, the notification sound S_{N} can be output as necessary.

When the external electric power supply can be continued in step S40, the control proceeds to step S42, and it is determined whether the driver gets in the hybrid vehicle 100.

Specifically, the shift position is checked in step S42. When it is checked in step S42 that the P range is released, the control proceeds to step S43. On the other hand, when it is checked in step S42 that the P range is maintained, the control proceeds to step S44.

The open and close state of the door is checked in step S43. When it is checked in step S43 that the door is closed, the control proceeds to step S41, and the muting of the notification sound S_{N} is cancelled. On the other hand, when it is checked in step S43 that the door is opened, the control proceeds to step S45, and the muting of the notification sound S_{N} is maintained.

The fastened and released state of the seat belt is checked in step S44. When the fastening of the seat belt is checked in step S44, the control proceeds to step S43. Then, as described above, the control proceeds to step S41 or step S45 according to the open and close state of the door, and the muting of the notification sound S_{N} is cancelled or is maintained. On the other hand, when it is checked in step S44 that the seat belt is not fastened, the control proceeds to step S45, and the muting of the notification sound S_{N} is maintained.

FIG. 8 is a flowchart related to a transition from the notification state β to the notification state α, and a transition from the notification state γ to the notification state α. As shown in FIG. 8, when the running state S_{V} of the hybrid vehicle 100 is the READY-OFF state in step S50, the energization to the first electric power system is stopped, and thus the engine 24 is in the non-runnable state, and the notification using the notification sound S_{N} is unnecessary. Therefore, when the notification state of the hybrid vehicle 100 is the notification state β, the condition C₄ is satisfied. Further, when the notification state of the hybrid vehicle 100 is the notification state γ, the condition C₅ is satisfied. Therefore, in either the notification state β or the notification state γ, when the running state S_{V} of the hybrid vehicle 100 is the READY-OFF state, the notification state of the hybrid vehicle 100 transitions to the notification state α. That is, the control proceeds to step 51, and the output of the notification sound S_{N} is stopped regardless of whether the notification sound S_{N} is muted.

When the running state S_{V} of the hybrid vehicle 100 maintains the READY-ON state in step S50, the control proceeds to step S52, and the getting-in detection of the driver is performed by the getting-in and getting-off detection portion 46. Specifically, the shift position detection portion 42 detects the release of the P range in step S52. In step S53, the door open and close determination portion 44 determines whether the door is closed. In step S54, the seat belt fastening and releasing determination portion 43 determines whether the seat belt is fastened. Then, when the P range is released and the door is closed, or when the seat belt is fastened and the door is closed, it is determined (detected) that the driver gets in the hybrid vehicle. Accordingly, when the notification state of the hybrid vehicle 100 is the notification state β, the condition C₄ is satisfied. Further, when the notification state of the hybrid vehicle 100 is the notification state γ, the condition C₅ is satisfied. Therefore, the control proceeds to step 51, and the output of the notification sound S_{N} is stopped regardless of whether the notification sound S_{N} is muted.

On the other hand, when it is determined (detected) in steps S52 to S54 that the driver does not get in the hybrid vehicle, the control proceeds to step S55. An output state or the muting state of the notification sound S_{N} is maintained in step S55. Specifically, when the notification state is the notification state β, the output of the notification sound S_{N} is maintained, and when the notification state is the notification state γ, the muting of the notification sound S_{N} is maintained.

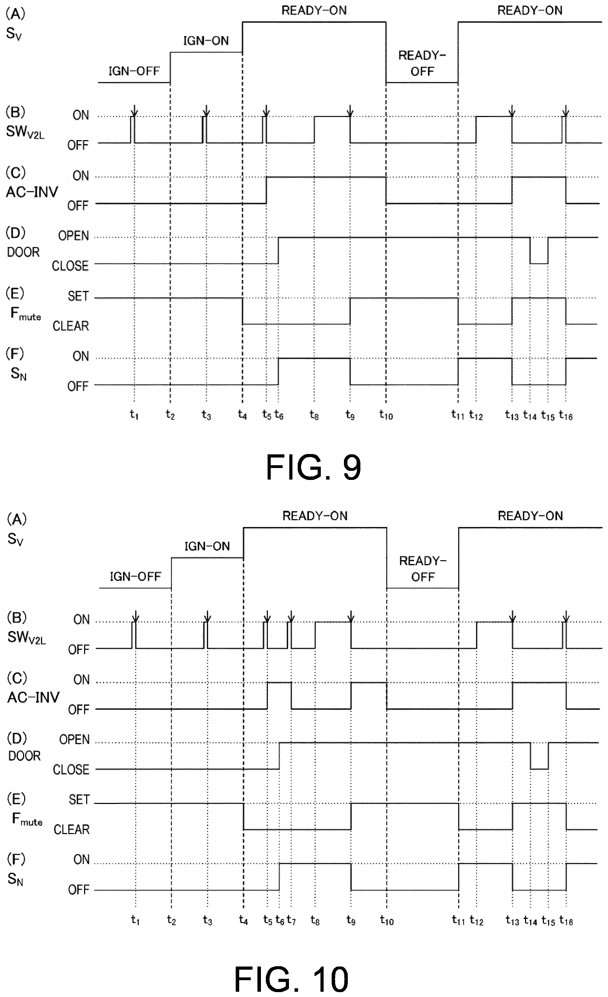

FIG. 9 is a time chart showing the output state of the notification sound S_{N} and the like. (A) of FIG. 9 shows the transition of the running state S_{V} of the hybrid vehicle 100. (B) of FIG. 9 shows an operation state of the external electric power supply switch 36 (SW_{V2L}). Arrows in (B) of FIG. 9 indicate timings (down edges) at which the operation on the external electric power supply switch 36 is enabled in terms of control. (C) of FIG. 9 shows an operational state of the external electric power supply inverter 26 (AC-INV). (D) of FIG. 9 shows setting states of the muting flag Fₘᵤₜₑ. (F) of FIG. 9 shows the ON/OFF of the notification sound S_{N}. The unit of the horizontal axis (time) in each chart of FIG. 9 is expressed in seconds, for example.

A time t₁ refers to a time at which the external electric power supply switch 36 is operated for the first time when the hybrid vehicle 100 does not run (the IGN-OFF state). A time t₂ refers to a time at which the running state S_{V} of the hybrid vehicle 100 transitions from the IGN-OFF state to the IGN-ON state. A time t₃ refers to a time at which the external electric power supply switch 36 is operated (the normal operation) in the IGN-ON state transitioned at the time t₂. A time t₄ refers to a time at which the running state S_{V} transitions from the IGN-ON state to the READY-ON state. A time t₅ refers to a time at which the normal operation on the external electric power supply switch 36 is detected for the first time in the READY-ON state transitioned at the time t₄. A time t₆ refers to a time at which the door is opened. In FIG. 9, a time t₇ is skipped. A time t₈ refers to a time at which the long-pressing operation on the external electric power supply switch 36 is started in the READY-ON state transitioned at the time t₄. A time t₉ refers to a time at which the long-pressing operation on the external electric power supply switch 36 is detected in the READY-ON state transitioned at the time t₄. A time t₁₀ refers to a time at which the READY-ON state started at the time t₄ transitions to the READY-OFF (IGN-ON or IGN-OFF) state. A time t₁₁ refers to a time at which the READY-OFF state started at the time t₁₀ transitions to the READY-ON state again. A time t₁₂ refers to a time at which the long-pressing operation on the external electric power supply switch 36 is started in the READY-ON state started at the time t₁₁. A time t₁₃ refers to a time at which the long-pressing operation on the external electric power supply switch 36 is detected in the READY-ON state started at the time t₁₁. A time t₁₄ refers to a time at which the door is closed. A time t₁₅ refers to a time at which the door is opened again. A time t₁₆ refers to a time at which the normal operation on the external electric power supply switch 36 is detected in the READY-ON state started at the time t₁₁.

As shown in (A) of FIG. 9, since the IGN-OFF state continues until the time t₂, neither the first electric power system nor the second electric power system is energized. Therefore, even when the external electric power supply switch 36 is operated at the time t₁ as shown in (B) of FIG. 9, the external electric power supply inverter 26 is not operated as shown in (C) of FIG. 9. That is, the external electric power supply function cannot be used.

Further, as shown in (A) of FIG. 9, since the IGN-ON state continues from the time t₂ to the time t₄, the second electric power system is energized, but the first electric power system including the power generation system 12 and the external electric power supply system 13 is not energized. Therefore, even when the external electric power supply switch 36 is operated at the time t₃ as shown in (B) of FIG. 9, the external electric power supply inverter 26 is not operated as shown in (C) of FIG. 9. That is, the external electric power supply function cannot be used.

On the other hand, as shown in (A) of FIG. 9, when the READY-ON state is achieved at the time t₄, the first electric power system including the power generation system 12 and the external electric power supply system 13 is energized. Therefore, when the external electric power supply switch 36 is operated at the time t₅ as shown in (B) of FIG. 9, the external electric power supply inverter 26 is operated as shown in (C) of FIG. 9. Accordingly, the external electric power supply function can be used. Further, as shown in (E) of FIG. 9, when the running state S_{V} of the hybrid vehicle 100 is in the READY-ON state, the muting flag Fₘᵤₜₑ is in the clear state. Therefore, as long as the READY-ON state continues, the notification sound S_{N} is output as necessary in principle.

Here, as shown in (D) of FIG. 9, when the door is opened at the time t₆, the getting-off of the driver is detected in the READY-ON state. Therefore, as shown in (F) of FIG. 9, the notification sound S_{N} is output from the time t₆, and the fact that the engine 24 is in the runnable state is notified to the driver who has got off the hybrid vehicle. Thereafter, when the long-pressing operation on the external electric power supply switch 36 is detected at the time t₉, the muting flag Fₘᵤₜₑ is changed to the set state as shown in (E) of FIG. 9. Therefore, although the door is opened and the driver has got off the hybrid vehicle, the notification sound S_{N} is muted from the time t₉ as shown in (F) of FIG. 9.

When the running state S_{V} of the hybrid vehicle 100 transitions to the READY-OFF state at the time t₁₀ as shown in (A) of FIG. 9, the external electric power supply inverter 26 is stopped as shown in (C) of FIG. 9. Therefore, the external electric power supply function stops at the time t₁₀. At this time, the muting flag Fₘᵤₜₑ is maintained in the set state as shown in (E) of FIG. 9. However, when the READY-OFF state is achieved, the energization to the first electric power system including the power generation system 12 and the external electric power supply system 13 is stopped, and the engine 24 is in the non-runnable state. Therefore, the notification state α is achieved in which it is not necessary to output the notification sound S_{N}, and thus as shown in (F) of FIG. 9, the notification sound S_{N} is not output regardless of the state of the muting flag Fₘᵤₜₑ.

Then, when the READY-ON state is achieved again at the time t₁₁, as shown in (E) of FIG. 9, the muting flag Fₘᵤₜₑ is changed to the clear state again, and the notification sound S_{N} can be output as necessary. Here, since the door is still opened as shown in (B) of FIG. 9 and it is still determined that the driver has got off the hybrid vehicle, the notification sound S_{N} is immediately output from the time t₁₁, and the fact that the engine 24 is in the runnable state is notified to the driver who has got off the hybrid vehicle as shown in (F) of FIG. 9.

Then, when the long-pressing operation on the external electric power supply switch 36 is detected at the time t₁₃, the muting flag Fₘᵤₜₑ is changed to the set state as shown in (E) of FIG. 9. Therefore, the notification sound S_{N} is muted from the time t₁₃ as shown in (F) of FIG. 9.

As described above, the conditions for the getting-in detection and the getting-off detection are different from each other, and it is not determined that the driver gets in the hybrid vehicle only when the door is closed. Therefore, the mute flag Fₘᵤₜₑ is not changed to the clear state only when the door is closed while the alarm sound S_{N} is in the muting state, and the notification sound S_{N} continues to be muted. For example, although the door is temporarily closed at the time t₁₄, the notification sound S_{N} continues to be muted even after the time t₁₄ as shown in (F) of FIG. 9.

However, when the external electric power supply is turned off by the operation on the external electric power supply switch 36, the muting flag Fₘᵤₜₑ is changed to the clear state, the muting of the notification sound S_{N} is cancelled, and the notification sound S_{N} can be output as necessary. Here, as shown in (B) of FIG. 9 and (C) of FIG. 9, when the external electric power supply is turned off at the time t₁₆, the muting flag Fₘᵤₜₑ is changed to the clear state as shown in (E) of FIG. 9. As a result, the notification sound S_{N} is output again at the time t₁₆ as shown in (F) of FIG. 9.

FIG. 10 is another time chart showing the output state of the notification sound S_{N} and the like. The parameters, the time points, and the like shown in (A) to (F) of FIG. 10 are the same as the parameters, the time points, and the like shown in (A) to (F) of FIG. 9, respectively. However, in FIG. 10, the operation on the external electric power supply switch 36 is detected at the time t₇ in the READY-ON state started at the time t₄.

When the operation on the external electric power supply switch 36 is detected at the time t₇ as shown in (B) of FIG. 10, the external electric power supply inverter 26 is accordingly stopped as shown in (C) of FIG. 10. Therefore, the external electric power supply cannot be used at the time t₇. Further, although the muting flag Fₘᵤₜₑ is changed to the clear state when the external electric power supply is turned off by the operation on the external electric power supply switch 36, the muting flag Fₘᵤₜₑ is in the clear state at this timing, and thus the clear state is continued. Therefore, as shown in (F) of FIG. 10, the output of the notification sound S_{N} started at the time t₆ is continued. That is, as long as the driver gets off the hybrid vehicle when the engine 24 is in the runnable state, the output of the notification sound S_{N} is continued regardless of the use/unuse of the external electric power supply function.

A scene from the time t₄ to the time t₁₀ in FIG. 9 refers to, for example, a scene in which the driver or the like uses the external electric power supply function in the hybrid vehicle while the hybrid vehicle 100 is traveling, and then the driver gets off the hybrid vehicle while such a use is continued. In addition, a scene from the time t₄ to the time t₁₀ in FIG. 10 refers to, for example, a scene in which the driver turns on the external electric power supply function and gets off the hybrid vehicle in order to use the external electric power supply function in an outdoor activity, and then hears the notification sound S_{N} and returns to mute the notification sound S_{N}.

### [Modifications]

According to the above embodiment, by a predetermined operation (the long-pressing operation on the external electric power supply switch 36), a sound to be output by the hybrid vehicle 100 is muted while the hybrid vehicle 100 can start up according to the intention of the driver or the like. Therefore, the hybrid vehicle 100 in a state in which the notification sound S_{N} is muted is more likely to be stolen than when muting of the notification sound S_{N} is cancelled. Further, the door of the hybrid vehicle 100 is often opened when the electric power is supplied to the external device outside the hybrid vehicle, and thus the hybrid vehicle 100 is more likely to be stolen in the state in which the notification sound S_{N} is muted. Therefore, as described below, it is preferable to include an identification verification step for the driver in the getting-in detection according to the above embodiment. Accordingly, it is more likely to prevent theft damage to the hybrid vehicle 100 even when the notification sound S_{N} is muted.

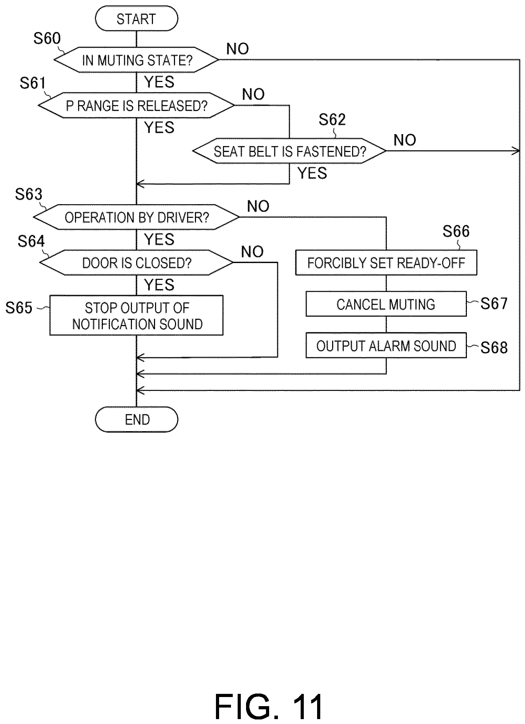

FIG. 11 is a flowchart according to a modification. As shown in FIG. 11, in a case in which the notification sound S_{N} is in the muting state in step S60, when a part of the conditions for the getting-in detection is satisfied, it is checked whether a person who satisfies the part of the conditions for the getting-in detection is the driver. Specifically, when the shift position detection portion 42 detects the release of the P range in step S61, or when the seat belt fastening and releasing determination portion 43 determines in step S62 that the seat belt is fastened, the control proceeds to step S63, and the controller 15 determines whether a person who releases the P range or a person who fastens the seat belt is the driver (owner) of the hybrid vehicle 100.

In this case, the controller 15 functions as a driver (identification) authentication unit. The controller 15 can determine whether the person who releases the P range or the person who fastens the seat belt is the driver (owner) of the hybrid vehicle 100 by, for example, fingerprint authentication, face authentication, authentication using a smart key, authentication using a device (such as a smartphone) cooperating with the hybrid vehicle 100, or any other authentication method.

When it is determined in step S63 that the person who releases the P range or the person who fastens the seat belt is the driver of the hybrid vehicle 100, the control proceeds to step S64. When the door open and close determination portion 44 checks in step S64 that the door is closed, the conditions for the getting-off detection are satisfied. Therefore, the control proceeds to step S65, and the output of the notification sound S_{N} is stopped.

On the other hand, when it is determined in step S63 that the person who releases the P range or the person who fastens the seat belt is not the driver of the hybrid vehicle 100, the control proceeds to step S66. In step S66, the controller 15 forcibly sets the running state S_{V} of the hybrid vehicle 100 to the READY-OFF (IGN-ON) state. Further, in step S67, the controller 15 cancels the muting by causing the muting control unit 48 to change the muting flag Fₘᵤₜₑ to the clear state. Accordingly, the vehicle exterior notification system 14 can output a sound or a voice. Then, in step S68, the controller 15 causes the vehicle exterior notification system 14 to output an alarm sound for theft prevention. The alarm sound for theft prevention is different at least in sound source or volume from the approaching vehicle notification sound or the notification sound S_{N}.

According to the above embodiment and the above modification, an example has been described in which the long-pressing operation on the external electric power supply switch 36 is an operation (the predetermined operation) serving as the trigger for muting the notification sound S_{N}, but this is only an example. The notification sound S_{N} may be muted by any predetermined operation other than the long-pressing operation on the external electric power supply switch 36.

Further, according to the above embodiment and the above modification, when the running state S_{V} of the hybrid vehicle 100 transitions from the READY-ON state to the READY-OFF state, the muting flag Fₘᵤₜₑ is maintained, but the present invention is not limited thereto. The muting flag Fₘᵤₜₑ may be changed when the running state S_{V} of the hybrid vehicle 100 is changed to the READY-OFF state. In addition, settings and the like other than the muting flag Fₘᵤₜₑ can be freely changed without departing from the spirit of the above embodiment and the above modification.

As described above, according to the control method of the hybrid vehicle 100 of the above embodiment and the above modification, when the getting-off of the driver is detected while the engine 24 is in the runnable state, the notification sound S_{N} is output to the outside of the hybrid vehicle 100 to notify that the engine 24 is in the runnable state. Then, when the external electric power supply for supplying the electric power of the battery 10 to the external device is performed while the engine 24 is in the runnable state, the notification sound S_{N} is muted when the getting-off of the driver is detected and a predetermined specific operation input (the long-pressing operation on the external electric power supply switch 36) is detected.

In this way, in the hybrid vehicle 100, when the driver gets off the hybrid vehicle while the engine 24 is in the runnable state, in principle, the driver is notified (announced) that the engine 24 is still in the runnable state by the notification sound S_{N}. Since the above is an important reminder to the driver, the hybrid vehicle 100 outputs the notification sound S_{N} regardless of the intention (desire) of the driver. On the other hand, when the external electric power supply function is used, the driver often gets off the hybrid vehicle while the engine 24 is still in the runnable state. In this case, there is a situation in which the notification sound S_{N} should be output formally, and thus there is a possibility that the notification sound S_{N} continues to be output intermittently or continuously, and a person other than the driver outside the hybrid vehicle feels uncomfortable. Therefore, as described above, in the hybrid vehicle 100, the notification sound S_{N} can be muted according to the intention of the driver by the predetermined specific operation input such as the long-pressing operation on the external electric power supply switch 36. That is, in the hybrid vehicle 100, the notification sound S_{N} can be muted depending on a situation within a range in which the significance of the notification sound S_{N} is not impaired. As a result, in the hybrid vehicle 100, the excessive notification sound S_{N} can be stopped according to the intention of the driver in a situation in which the driver feels uncomfortable while the important reminder is performed by outputting the notification sound S_{N} in principle.

According to the control method of the hybrid vehicle of the above embodiment and the above modification, the specific operation input is the long-pressing operation on the operation switch (the external electric power supply switch 36) that starts or stops the external electric power supply. A typical situation in which the output of the notification sound S_{N} is necessarily continued refers to a situation in which the external electric power supply function is used. Therefore, as described above, since the specific operation input using the operation switch related to the external electric power supply serves as the trigger for muting the notification sound S_{N}, the driver can easily mute the notification sound S_{N} depending on a situation.

According to the control method of the hybrid vehicle of the above embodiment and the above modification, when the shift 32 is set to the parking range (P range), the seat belt is released, and the door is opened, the getting-off of the driver is detected. In this way, when the getting-off of the driver is determined based on the shift position, the fastened and released state of the seat belt, and the open and close state of the door, it is possible to particularly, easily, and reliably detect the getting-off of the driver. As a result, the hybrid vehicle 100 can output the notification sound S_{N} at an accurate timing.

According to the control method of the hybrid vehicle of the above embodiment and the above modification, when the external electric power supply is performed while the engine 24 is in the runnable state, the notification sound S_{N} can be muted after the notification sound S_{N} is output in response to the detection of the getting-off of the driver. That is, the hybrid vehicle 100 does not directly transition from the notification state α to the notification state γ, and is allowed to transition to the notification state γ in which the notification sound S_{N} is muted after going through the notification state β in which the notification sound S_{N} is output. In this way, even when the external electric power supply function is used, when the hybrid vehicle 100 outputs the notification sound S_{N} at least once, the driver reliably recognizes that the engine 24 is in the runnable state, and then mutes the notification sound S_{N} based on driver's determination of the situation. Therefore, the important reminder that the engine 24 is in the runnable state is reliably performed, and the significance of the output of the notification sound S_{N} is not particularly impaired.

According to the control method of the hybrid vehicle of the above embodiment and the above modification, when the external electric power supply is stopped or when the getting-in of the driver is detected, the muting of the notification sound S_{N} is cancelled (see FIG. 5). Since the notification sound S_{N} is output for the important reminder, the muting of the notification sound S_{N} is an exceptional measure. Therefore, when a special situation in which the notification sound S_{N} is to be necessarily muted is resolved, the notification sound S_{N} needs to be output. Further, when the external electric power supply is stopped or when the getting-in of the driver is detected, it can be said that the situation in which the notification sound S_{N} is to be necessarily muted is resolved, and thus the hybrid vehicle 100 cancels the muting of the notification sound S_{N} and outputs the notification sound S_{N} as necessary as described above. Accordingly, the hybrid vehicle 100 accurately outputs the notification sound S_{N} as necessary without unnecessarily continuing the muting of the notification sound S_{N}. That is, the hybrid vehicle 100 can accurately notify the driver that the engine 24 is in the runnable state.

According to the control method of the hybrid vehicle of the above embodiment and the above modification, the getting-in of the driver is determined when the door is closed and at least one of the transitions of the shift 32 from the parking range (P range) to another range or the fastening of the seat belt is detected. In this way, the hybrid vehicle 100 can particularly and accurately detect the getting-in of the driver by determining (detecting) the getting-in of the driver based on the shift position or the fastened and released state of the seat belt and the open and close state of the door. As a result, the hybrid vehicle 100 can cancel the muting of the notification sound S_{N} at a particular and accurate timing.

According to the control method of the hybrid vehicle of the above embodiment and the above modification, the notification sound S_{N} is a sound common to the approaching vehicle notification sound for notifying the outside of the hybrid vehicle of the approach of the hybrid vehicle 100. The approaching vehicle notification sound is usually a sound capable of notifying a person and the like outside the hybrid vehicle of the approach of the hybrid vehicle 100 without causing discomfort. Therefore, as described above, by setting the approaching vehicle notification sound as the notification sound S_{N}, the hybrid vehicle 100 can notify the driver and the like outside the hybrid vehicle that the engine 24 is in the runnable state without causing discomfort. As a result, an opportunity for the driver to mute the notification sound S_{N} is reduced, and thus the hybrid vehicle 100 is more likely to continue the reminder by the notification sound S_{N}.

According to the control method of the hybrid vehicle of the above embodiment and the above modification, when the transition of the shift 32 from the parking range (P range) to another range or the fastening of the seat belt is detected while the notification sound S_{N} is muted, whether the operation on the shift 32 or the fastening of the seat belt is performed by the driver is determined. Further, when it is determined that a person other than the driver performs the operation on the shift 32 or the fastening of the seat belt, a warning sound different from the notification sound S_{N} is output to the outside of the hybrid vehicle 100 regardless of a muting setting of the notification sound S_{N}. Accordingly, it is more likely to prevent theft to the hybrid vehicle 100 even in a situation in which the notification sound S_{N} is muted.

According to the control method of the hybrid vehicle of the above embodiment and the above modification, the warning sound is output particularly regardless of the open and close state of the door. That is, when the hybrid vehicle 100 is likely to be stolen, the hybrid vehicle 100 quickly outputs the warning sound even when the door is opened. Accordingly, it is more likely to particularly prevent the theft to the hybrid vehicle 100 even in the situation in which the notification sound S_{N} is muted.

The control device (controller 15) of the hybrid vehicle according to the above embodiment and the above modification includes (a) the notification sound output control unit 47 that causes the notification sound S_{N} to be output to the outside of the hybrid vehicle 100 to notify that the engine 24 is in the runnable state when the getting-off of the driver is detected while the engine 24 is in the runnable state, and (b) the muting control unit 48 that mutes the notification sound S_{N} when the getting-off of the driver is detected and the predetermined specific operation input is detected, when the external electric power supply for supplying the electric power of the battery 10 to the external device is performed while the engine 24 is in the runnable state. In this way, since the controller 15 includes the notification sound output control unit 47 and the muting control unit 48, in the hybrid vehicle 100, the excessive notification sound S_{N} can be stopped according to the intention of the driver in the situation in which the driver feels uncomfortable while the important reminder is performed by outputting the notification sound S_{N} in principle.

The control program of the hybrid vehicle according to the above embodiment and the above modification functions as (a) the notification sound output control unit 47 that causes the control device (controller 15) of the hybrid vehicle 100 to output the notification sound S_{N} to the outside of the hybrid vehicle 100 to notify that the engine 24 is in the runnable state when the getting-off of the driver is detected while the engine 24 is in the runnable state, and (b) the muting control unit 48 that mutes the notification sound S_{N} when the getting-off of the driver is detected and the predetermined specific operation input is detected when the external electric power supply for supplying the electric power of the battery 10 to the external device is performed while the engine 24 is in the runnable state. In this way, since the control program of the hybrid vehicle causes the controller 15 to function as the notification sound output control unit 47 and the muting control unit 48, in the hybrid vehicle 100, the excessive notification sound S_{N} can be stopped according to the intention of the driver in the situation in which the driver feels uncomfortable while the important reminder is performed by outputting the notification sound S_{N} in principle.

The storage medium storing the control program of the hybrid vehicle according to the above embodiment and the above modification stores the control program functioning as (a) the notification sound output control unit 47 that causes the control device (controller 15) of the hybrid vehicle 100 to output the notification sound S_{N} to the outside of the hybrid vehicle 100 to notify that the engine 24 is in the runnable state when the getting-off of the driver is detected while the engine 24 is in the runnable state, and (b) the muting control unit 48 that mutes the notification sound S_{N} when the getting-off of the driver is detected and the predetermined specific operation input is detected when the external electric power supply for supplying the electric power of the battery 10 to the external device is performed while the engine 24 is in the runnable state.

Although the embodiment and the modification of the present invention have been described above, configurations described in the above embodiment and the above modification are merely a part of application examples of the present invention, and are not intended to limit the technical scope of the present invention.

## Claims

1. A hybrid vehicle control method, comprising:
outputting a notification sound to the outside of a hybrid vehicle to notify that an engine is in the runnable state, when a getting-off of a driver is detected while the engine is in a runnable state; and
muting the notification sound when the getting-off of the driver is detected and a predetermined specific operation input is detected, when an external electric power supply for supplying electric power of a battery to an external device is performed while the engine is in the runnable state.

2. The hybrid vehicle control method according to claim 1, wherein
the specific operation input refers to a long-pressing operation on an operation switch for starting or stopping the external electric power supply.

3. The hybrid vehicle control method according to claim 1, wherein
the getting-off of the driver is detected when a shift is set to a parking range, a seat belt is released, and a door is opened.

4. The hybrid vehicle control method according to claim 1, wherein
when the external electric power supply is performed while the engine is in the runnable state, the notification sound is enabled to be muted after the notification sound is output in response to the detection of the getting-off of the driver.

5. The hybrid vehicle control method according to claim 1, wherein
when the external electric power supply is stopped or when getting-in of the driver is detected, the muting of the notification sound is cancelled.

6. The hybrid vehicle control method according to claim 5, wherein
the getting-in of the driver is determined when a door is closed and at least one of transition of a shift from a parking range to another range or fastening of a seat belt is detected.

7. The hybrid vehicle control method according to claim 1, wherein
the notification sound is a sound common to an approaching vehicle notification sound for notifying the outside of the hybrid vehicle of the approach of the hybrid vehicle.

8. The hybrid vehicle control method according to claim 1, wherein
when a transition of a shift from a parking range to another range or fastening of a seat belt is detected while the notification sound is muted, determining whether the operation on the shift or the fastening of the seat belt is performed by the driver, and
when it is determined that a person other than the driver performs the operation on the shift or the fastening of the seat belt, outputting a warning sound different from the notification sound to the outside of the hybrid vehicle regardless of a muting setting of the notification sound.

9. The hybrid vehicle control method according to claim 8, wherein
the warning sound is output regardless of an open and close state of a door.

10. A hybrid vehicle control device, comprising:
a notification sound output control unit configured to cause a notification sound to be output to the outside of a hybrid vehicle to notify that an engine is in the runnable state, when a getting-off of a driver is detected while the engine is in a runnable state; and
a muting control unit configured to mute the notification sound when the getting-off of the driver is detected and a predetermined specific operation input is detected, when an external electric power supply for supplying electric power of a battery to an external device is performed while the engine is in the runnable state.
